# EUROPEAN PATENT APPLICATION

(11) **EP 4 570 342 A1**
(43) Date of publication of application: **18.06.2025**
(21) Application number: 24210760.5
(22) Date of filing: 05.11.2024
(51) Int. Cl.: B01D 29/11, B01D 29/64, B01D 35/02, D06F 39/10

(54) **FILTER FOR A MACHINE FOR WASHING LAUNDRY OR TEXTILE ARTICLES**

(30) Priority: 11.12.2023 IT 202300026361
(71) Applicant: ELECTROLUX APPLIANCES AKTIEBOLAG, 105 45 Stockholm (SE)
(72) Inventor: LEONE, Carlo Antonio, 33080 Porcia (PN) (IT); CASAGRANDE, Stefano, Porcia (PN) (IT); BRUNO, Giacomo, 33080 Porcia (PN) (IT); MARIUZZO, Marco, 33080 Porcia (PN) (IT)
(74) Representative: Electrolux Group Patents

(57) **Abstract**

A filter assembly (**100**; **200**; **300**) for filtering a fluid used in an appliance (**400**) for washing laundry or textile articles. The filter assembly comprises: a filtering element (**105**) enclosing an inlet chamber (**110**) suitable for receiving said fluid; a housing (**115**) suitable for housing the filtering element (**105**); an outlet chamber (**120**) defined by a volume comprised between the filtering element (**105**) and the housing (**115**) for receiving the filtered fluid resulting from the passage of the fluid from the inlet chamber through a filtering surface (**105**(**M**)) of the filtering element; an inlet (**IN**) through which the fluid is supplied to the inlet chamber (**110**); an outlet (**OUT**) in fluid communication with said outlet chamber (**120**), through which filtered fluid exits the outlet chamber (**120**); a cleaning system located within the inlet chamber (**110**) adapted to remove filtered contaminants from the filtering surface (**105**(**M**)), the cleaning system comprising a scraper device (**140**; **240**) adapted to be rotated about a rotation axis (**R**) to remove filtered contaminants from said filtering surface through mechanical interaction of the scraper device with the filtering surface during rotation of the scraper device, and to move the removed filtered contaminants away from the inlet chamber; a collection region (**130**(**R**)) for collecting the removed filtered contaminants moved away from the inlet chamber (**110**). The scraper device (**140**; **240**) is configured to be movable relative to the filtering element (**105**) along the rotation axis (**R**) by a pushing action of the collected filtered contaminants when an amount of filtered contaminants is collected in the collection region (**130**(**R**)); the filter assembly (**100**; **200**; **300**) further includes a position sensing system (**190**, **195**) configured to sense the position of the scraper device (**140**; **240**) along the rotation axis (**R**) and provide a signal indicative of the sensed position.

## Description

### Background of the present invention

### Field of the present invention

The present invention generally relates to the field of laundry or textile washing appliance, and in particular to a filter assembly for filtering contaminants from a fluid used by a laundry or textile washing appliance. The invention also relates to a laundry or textile washing appliance provided with the filter assembly and to a method for operating the filter assembly.

### Overview of related art

Different types of appliances for washing laundry or textile items, both for domestic and professional applications, use one or more fluids during their operation.

Referring, for example, to household appliances for washing textile products (e.g., clothes), such as washing machines or washer/dryers for washing and drying laundry, such fluids may include water and/or water mixed with chemical treatment agents for textile products, such as detergents, fabric softeners, dyes, stain removers, and so on.

It is known to equip such appliances with special devices or filter units designed to filter the fluid from contaminants including undesired materials present in the fluid. Examples of contaminants include foreign bodies, such as coins, gravel, metal elements, buttons, hair, which were in the textile products at the start of the treatment, and/or elements, such as filaments, fluff, etc. which make up the textile products themselves and which detach from them during the treatment operations performed by the appliance. Contaminants can compromise the correct performance of the treatment operations, for example if the fluid including contaminants were recirculated in the appliance, and/or can have a significant environmental impact, for example if the fluid including contaminants were discharged from the appliance into a drainage system. Among the contaminants released by textile products, particularly those of a synthetic nature, having a very significant environmental impact, the so-called "microplastics" can be identified, i.e., particles of plastic material with dimensions ranging from a few millimetres to a few microns. As known, microplastics pollution is considered a threat to the ecosystem and human and animal health.

Known filter assemblies comprise a cylindrical filtering element with filtering walls and a filter housing enclosing the filtering element. Fluid coming from an inlet port of the filter assembly is forced to enter a volume enclosed by the filtering element and to reach a volume of the filter assembly between the filter housing and the filtering element by passing through the filtering walls of the filtering element. The filtering walls of the filtering element are configured to retain contaminants larger than a predefined size. In this way, the filtered contaminants remain within the volume enclosed by the filtering element, and the fluid reaching the volume between the filter housing and the filtering element is free of the filtered contaminants. The filtered fluid is then discharged out of the filter assembly through an outlet port.

With the use of the filter assembly, the filtering walls of the filtering element become dirty, clogged with the contaminants retained, and therefore the effectiveness of the filter assembly can be compromised. In the event of excessive clogging that no longer allows the fluid to pass through the filtering walls, the filter assembly can no longer function and can even be damaged due to the overpressures that are generated in the filter housing and in the filter itself due to the clogging of the filtering walls.

For this reason, it is known to perform cleaning operations aimed at removing contaminants from the filtering walls of the filtering element.

EP4115966A1 shows a filtering system for a household appliance comprising a filter with a filtering surface for filtering particles from a fluid, a cleaning element, and a cleaning element actuating device for moving the cleaning device with a translational and rotational motion relative to the filtering surface.

### Summary of the present invention

The Applicant observed that the solutions known in art are not efficient, presenting drawbacks.

In particular, in the filtering system shown in EP4115966A1, the particles removed from the filtering surfaces by the action of the cleaning element progressively accumulate inside the filter. If the user does not frequently open the filter system to inspect the amount of particles accumulated inside the filter to decide whether to empty the filter or not, the amount of particles accumulated inside the filter could compromise the operation of the cleaning element and/or the overall operation of the filtering system. In a filtering system such as that shown in EP4115966A1, the user has no way of defining when it is necessary to empty the filter from the amount of particles accumulated inside it, without incurring a malfunction of the filter or intervening well in advance of when actually necessary.

In view of the above, the Applicant has devised a filter assembly that is not affected by the aforementioned drawbacks.

One or more aspects of the present invention are set forth in the independent claims, with advantageous features of the same invention being indicated in the dependent claims, the wording of which is incorporated herein by reference.

One aspect of the present invention relates to a filter assembly for filtering a fluid used in an appliance for washing laundry or textile articles.

The filter assembly comprises a filtering element enclosing an inlet chamber adapted to receive said fluid.

The filter assembly comprises a housing adapted to house the filtering element.

The filter assembly comprises an outlet chamber defined by a volume comprised between the filtering element and the housing for receiving the filtered fluid resulting from the passage of the fluid from the inlet chamber through a filtering surface of the filtering element.

The filter assembly comprises an inlet through which the fluid is supplied to the inlet chamber.

The filter assembly comprises an outlet fluidly connected to said outlet chamber, through which the filtered fluid exits the outlet chamber.

The filter assembly comprises a cleaning system located inside the inlet chamber apt to remove filtered contaminants from the filtering surface.

The cleaning system comprises a scraper device adapted to be rotated about a rotation axis for removing filtered contaminants from said filtering surface through the mechanical interaction of the scraper device with the filtering surface during rotation of the scraper device, and for moving the removed filtered contaminants away from the inlet chamber.

The filter assembly comprises a collection region for collecting the removed filtered contaminants moved away from the inlet chamber.

The scraper device is configured to be movable with respect to the filtering element along the rotation axis by means of a pushing action of the collected filtered contaminants when an amount of filtered contaminants is collected in the collection region.

The filter assembly further comprises a position sensing system configured to sense the position of the scraper device along the rotation axis and to provide a signal indicative of the sensed position.

According to an exemplary embodiment, the scraper device comprises an endless screw comprising a blade surrounding a central shaft. Advantageously, an endless screw allows for effective cleaning of the scraped surface and allows for a pushing force to be imparted on the material removed from the scraped surface in a preferred direction.

In an exemplary embodiment, said blade is configured to mechanically interact with the filtering surface.

In a further embodiment, instead of or in addition to a blade, the scraper device may be provided with brush elements that interact mechanically with the filtering surface.

According to an exemplary embodiment, said rotation axis is substantially parallel to said filtering surface. Thanks to this configuration, the movement of the scraper device allows for an effective cleaning of the filtering surface by removing and displacing the filtered contaminants.

In an exemplary embodiment, the filter assembly comprises guide elements coupled to the inlet chamber that extend along the rotation axis.

In an exemplary embodiment, the guide elements are configured to slidingly engage with the scraper device to allow movement of the scraper device with respect to the inlet chamber along the rotation axis. The guide elements allow maintaining the scraper device in the correct position relative to the filtering surface during its movement along the rotation axis.

According to an exemplary embodiment, the pushing action of the collected filtered contaminants acting on the scraper device can be contrasted by a biasing element associated with the scraper device. The biasing element allows the scraper device to be moved back to the position taken in the clean filter assembly condition when the collected filtered contaminants are removed from the filter assembly itself.

According to an exemplary embodiment, the biasing element is an elastically deformable element, such as a spring.

According to an exemplary embodiment, the scraper device is configured to compact the removed filtered contaminants in the collection region by pressing the removed filtered contaminants in the collection region along the rotation axis in a first direction during rotation of the scraper device. The removal of the filtered contaminants and their movement in a preferential direction helps to keep the filtering surface clean for a long time, avoiding the redeposition of the removed filtered contaminants on the filtering surface itself.

According to an exemplary embodiment, the scraper device may be movable by means of the pushing action of the collected filtered contaminants along the rotation axis of the scraper device in a second direction opposite to the first direction. The pushing action exerted on the scraper device by the filtered contaminants collected in the collection region allows the displacement of the scraper device along the rotation axis to be related to the amount of contaminants present in the collection region.

According to an exemplary embodiment, a scraper device is provided which, when mounted in the filter assembly and in the condition in which the collection region is empty, that is, it does not contain contaminants, extends inside the collection region for a length, measured along the rotation axis, between 1 mm and 10 mm, preferably between 1 mm and 5 mm.

According to an exemplary embodiment, a scraper device is provided which, when mounted in the filter assembly and in the condition in which the collection region is empty, that is it does not contain contaminants, occupies a volume within the collection region between 5% and 25% of the volume of the collection region, preferably between 5% and 15% of the volume of the collection region, more preferably between 5% and 10% of the volume of the collection region.

The different size ranges or percentage ranges defined above for the linear penetration of the scraper device into the collection region, or for the percentage of volume occupancy of the collection region by the scraper device, can be applied based on the desired sensitivity of the sensing of the displacement of the scraper device along its rotation axis caused by the accumulation of contaminants in the collection region.

According to an exemplary embodiment, the position sensing system of the scraper device may comprise a magnetic position sensor. However, other types of position sensor systems may be used, such as capacitive, inductive, optical, piezoelectric position sensor systems, devices equipped with encoders or potentiometers.

According to an exemplary embodiment, the filter assembly may comprise a flooding chamber fluidly connected to the outlet chamber and fluidly connectable to the inlet chamber in a selective manner by means of a fluid communication device operable for enabling a fluid communication between the inlet chamber and the flooding chamber in presence of a clogging of the inlet chamber and/or the filtering element, thereby allowing unfiltered fluid to flow towards the outlet of the filter assembly. In the event that the fluid to be filtered cannot pass through the filtering element, for example, because the latter is completely clogged, the fluid accessing the filter assembly may be evacuated without filtration, thereby avoiding possible damage to the components of the filter assembly.

According to an exemplary embodiment, the inlet chamber enclosed by the filtering element may comprise a first inlet chamber portion fluidly connected to said inlet, and a second inlet chamber portion selectively fluidly separated from the first inlet chamber portion. The partition of the inlet chamber into two or more portions allows for the selective use of different areas of the filtering surface of the filtering element for the filtration of the fluid to be filtered, thus managing the overall degree of clogging of the entire filtering element.

According to an exemplary embodiment, the scraper device may be located in a first portion of the inlet chamber. In this way, only a portion of the filtering surface of the filtering element will be continuously cleaned by the scraper device, while a second portion of the inlet chamber different from the first one may be used for occasional filtering of the fluid to be filtered.

According to an exemplary embodiment, the filter assembly may comprise a fluid connection device comprising a displaceable body for selectively enabling and disabling a fluid connection between the first and second inlet chamber portions based on a working condition of the first inlet chamber portion. In this way, fluid communication between the first and second inlet chamber portions may be established only when the first inlet chamber portion and/or the filtering surface enclosing it exhibits an abnormal operating situation.

According to an exemplary embodiment, an enablement of a fluid connection between the first and second inlet chamber portions may occur based on a working condition indicating a clogging of a first inlet chamber portion, thereby allowing fluid to flow from the inlet of the filter assembly to a second inlet chamber portion through the first inlet chamber portion. In the event that the filtration efficiency of the filtering surface enclosing the first inlet chamber portion fails, such efficiency may be at least temporarily fully restored by assigning to the filtering surface enclosing the second inlet chamber portion the task of carrying out the filtration process.

According to an exemplary embodiment, a disablement of a fluid connection between the first and second inlet chamber portions may occur when the working condition is indicative of a non-clogging of the first inlet chamber portion, to place the first and second inlet chamber portions in fluid separation. Should the first inlet chamber portion return to operating efficiency, access of the fluid to be filtered to the second inlet chamber portion would be precluded, thus advantageously maintaining the operating efficiency of the second inlet chamber portion as well.

According to an exemplary embodiment, the second inlet chamber portion can receive the fluid to be filtered from the inlet of the filter assembly only when the fluid connection between the first and second inlet chamber portions is enabled. This technical solution allows to precisely control which portion of the inlet chamber should be affected by the inlet of the fluid to be filtered.

According to an exemplary embodiment, said filtering surface of the filtering element comprises a mesh having a size configured to retain particles having a minimum size of between 0.1 µm and 5 mm, preferably a minimum size of between 10 µm and 100 µm, more preferably a minimum size of between 10 µm and 75 µm. Thanks to these dimensions of the filtering mesh, the portions of fabric, in particular synthetic fabric, that might happen to be released into the treatment fluid during a washing process would be retained in the filtering element and not discharged downstream of it with the flow of fluid exiting the appliance for washing laundry or textile articles.

According to an exemplary embodiment, the filter assembly may comprise an electric motor configured to rotate the scraper device around the rotation axis. The presence of an electric motor allows the scraper device to be actuated based on an operating parameter of the filter assembly and/or of a laundry or textile washing appliance to which the filter assembly is hydraulically connected.

According to an exemplary embodiment, the collection region may be located at one end of the inlet chamber enclosed by the filtering element. In this position, collection of filtered contaminants removed from the filtering surface and displaced by the scraper device is facilitated, avoiding dispersing the contaminants along tortuous movement paths. According to an exemplary embodiment, the collection region may be defined by a collection chamber element that is configured to be selectively associated/dissociated from the inlet chamber. Due to the removability of the collection chamber element, periodic emptying of the filtered contaminants removed from the filter assembly for their proper disposal is easily possible.

According to an exemplary embodiment, the filter assembly may comprise an output system configured to provide, based on a signal indicative of the sensed position of the scraper device, an indication comprising one or more of the following:
- an indication of the quantity of contaminants accumulated in the collection region;
- an indication regarding a filling condition of the collection region ;
- an indication of the need to empty the collection region.

According to an exemplary embodiment, an indication regarding a filling condition of the collection region may be configured in terms of predefined levels (e.g., "empty", "half full", "full"), each corresponding to a respective predefined range of values of said signal. A progressive indication of the filling condition of the collection region allows a user to be informed relatively in advance of the occurrence of a complete filling of the collection region and to decide whether or not to perform a manual emptying operation of contaminants from the filter assembly based on the subsequent use of the filtering function of the filter assembly that the user intends to make.

According to an exemplary embodiment, an indication of the need to empty the collection region can be generated when a signal indicative of the sensed position of the scraper device has reached a predefined threshold value. Defining thresholds for the signal indicative of the sensed position of the scraper device is useful and advantageous for discriminating signal values relating to temporary displacement conditions of the scraper device during its operation. Such temporary conditions generate fluctuations in the signal that are not representative of the need to empty the collection region and should therefore be discriminated as 'noise' of the signal.

According to an exemplary embodiment, an indication provided by the output system may be provided in the form of visual indications, for example by lighting up appropriate lights or displaying messages on display elements such as a screen.

According to an exemplary embodiment, an indication provided by the output system may also, or instead, be provided in the form of audible indications, for example by generating audio alerts. Visual or audible indications help the user to immediately recognize the information content of the provided indication.

According to an exemplary embodiment, the indication may also, or instead, be provided in the form of a signal, digital or analog, to be sent to a device external to the filter assembly, such as a smartphone equipped with an appropriate application capable of interacting with the output system, or to be sent to a control unit of the laundry or textile washing appliance to which the filter assembly is hydraulically connected. In this way, the indication provided in the form of a signal may be processed and/or used by an algorithm to define a usage recommendation addressed to the user and/or an operating condition of the laundry or textile washing appliance.

According to an exemplary embodiment, the output system may be provided externally to the filter assembly. For example, the output system may be provided in the laundry or textile washing appliance to which the filter assembly is connected, or the functions of the output system may be performed by the control unit of the laundry or textile washing appliance that controls its various operating functions. In this way, the construction of the filter assembly is simplified.

According to an exemplary embodiment, under operating conditions, the rotation axis of the scraper device may be parallel to a direction of a prevailing extension dimension of the inlet chamber.

According to an exemplary embodiment, said direction of a prevailing extension dimension of the inlet chamber may be a vertical direction or a horizontal direction relative to a ground plane.

Another aspect of the present invention relates to an appliance for washing laundry or textile articles comprising:
- a control unit configured to control a laundry or textile articles treating operation by the appliance and a drain pipe to drain fluid from a laundry or textile articles treating chamber into a recirculation conduit to supply said fluid back to the laundry or textile articles treating chamber and/or a drain outside the appliance;
- a filter assembly, wherein the inlet of the filter assembly is fluidly connected to the drain pipe and the outlet of the filter assembly is connected to the recirculation conduit and/or the drain.

For example, the appliance for washing laundry or textile articles may be a washing machine configured for washing only, or a washer/dryer configured for washing and drying laundry or textile articles.

Another aspect of the present invention relates to a method of operating a filter assembly having a combination of the features illustrated above.

The method comprises:
- operating the scraper device of the cleaning system to rotate it around a rotation axis;
- removing the filtered contaminants from the filtering surface through mechanical interaction of the scraper device with the filtering surface during rotation of the scraper device;
- moving the removed filtered contaminants away from the inlet chamber by means of rotation of the scraper device;
- collecting the removed filtered contaminants moved away from the inlet chamber in the collection region;
- providing a signal indicative of the position of the scraper device which moves relative to the filtering element along the rotational axis by means of a pushing action of the collected filtered contaminants when an amount of filtered contaminants is collected in the collection region.

According to an exemplary embodiment, the method may further comprise:
- establishing a fluid connection between the inlet of the filter assembly and a drain pipe of the laundry or textile articles washing appliance, wherein the drain pipe is provided to drain fluid from the laundry or textile articles treating chamber;
- establishing a fluid connection between the filter assembly outlet and a recirculation conduit to supply fluid back to the laundry or textile articles treating chamber and/or connecting the filter assembly outlet to a drain outside to the equipment;
- communicatively coupling the control unit of the laundry or textile washing appliance with the position sensing system of the filter assembly.

### Brief description of the drawings

**Figure 1A** is an exploded view of a filter assembly according to a first exemplary embodiment;
**Figures 1B** and **1C** are sectional views of the filter assembly of **Figure 1A** in a first and second operating conditions, respectively;
**Figures 2A** and **2B** are sectional views of a filter assembly in accordance with a second exemplary embodiment of the present invention;
**Figure 3** is a sectional view of a filter assembly in accordance with a third exemplary embodiment of the present invention;
**Figure 4** schematically illustrates an example of how a filter assembly can be connected to an appliance for washing laundry or textile articles.

### Detailed description of exemplary and non-limiting embodiments of the present invention

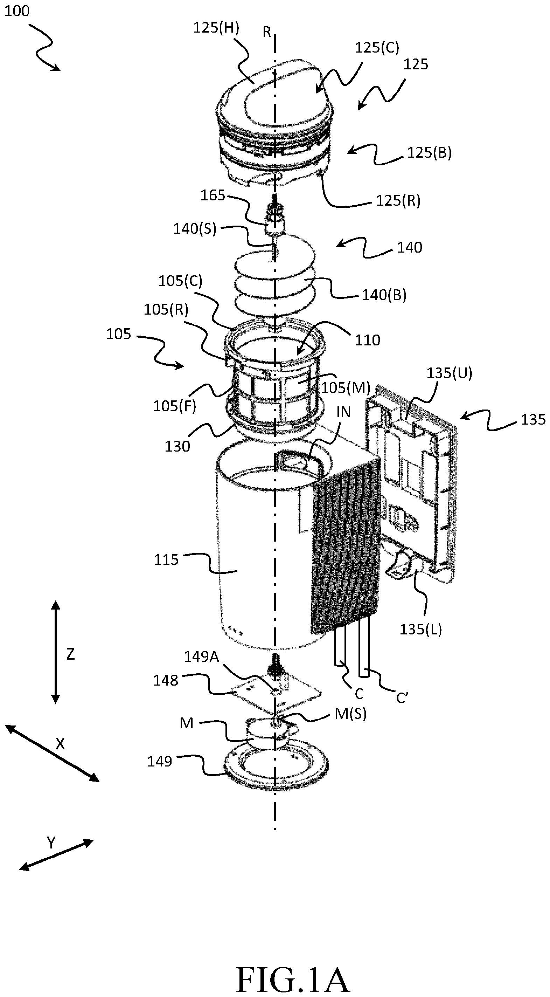

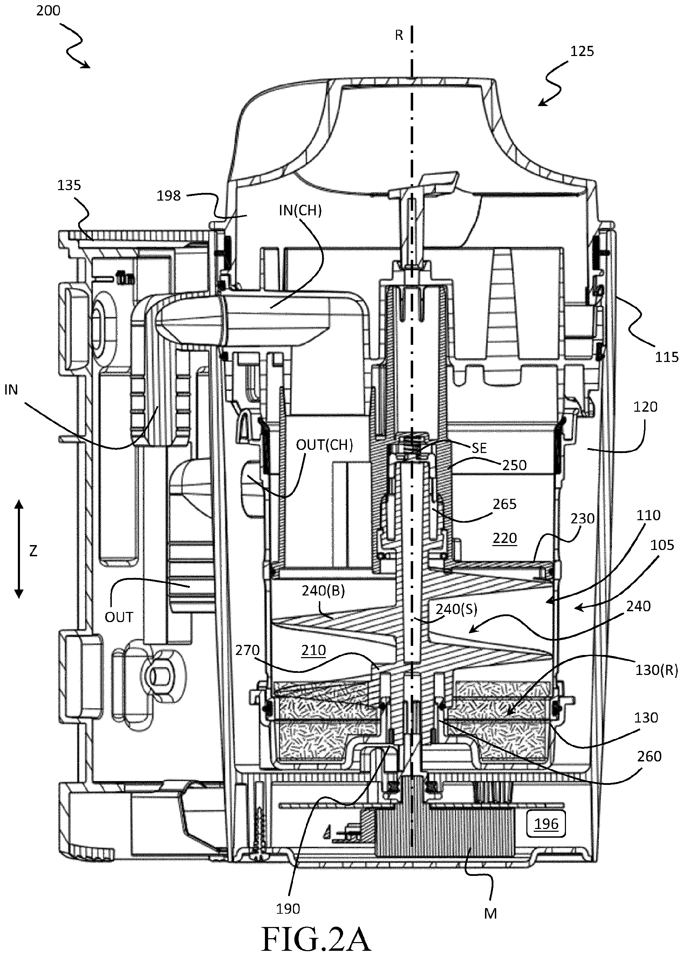

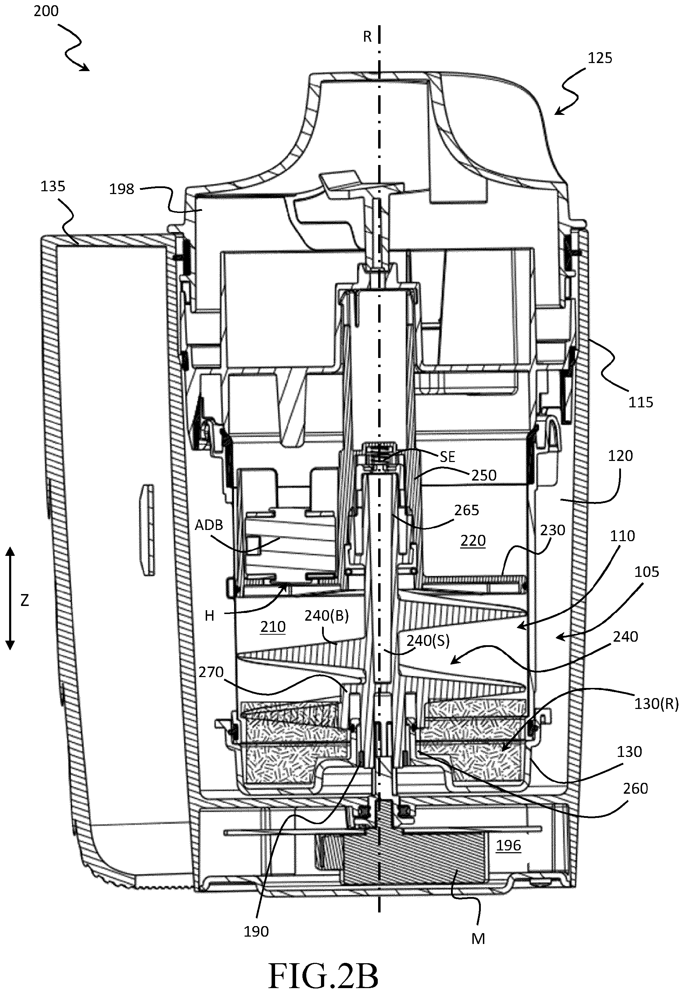

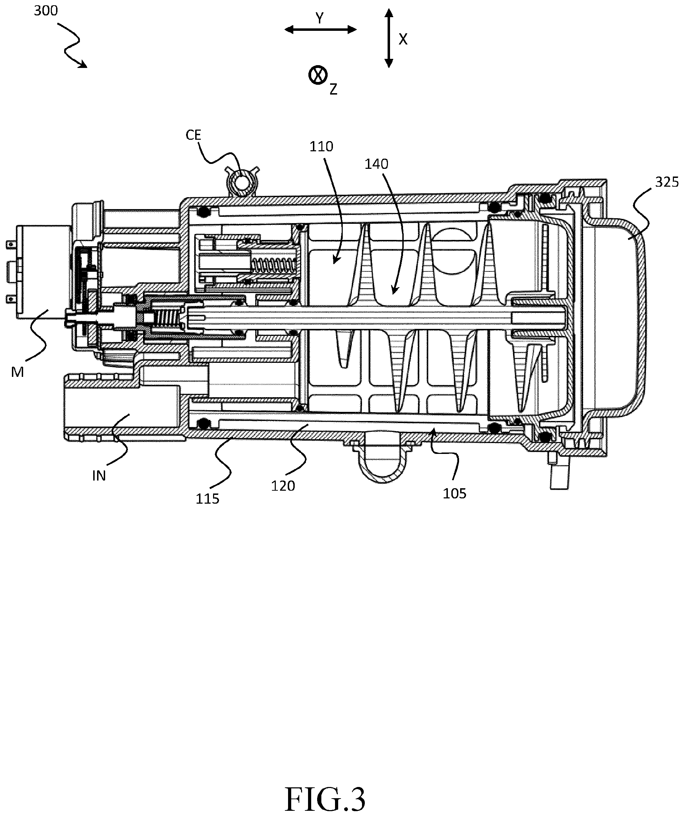

Referring to the drawings, **Figures 1A-3** illustrate filter assemblies **100** (**Figures 1A-1C**), **200** (**Figures 2A****,** **2B**), **300** (**Figure 3**) according to exemplary embodiments of the present invention.

The filter assemblies in accordance with exemplary embodiments of the present invention are particularly advantageous when used to filter a fluid to be discharged/recirculated from/into a laundry or textile articles washing appliance (e.g. for domestic or professional use) such as a washing machine or a washer/dryer. However, it is emphasized that the filter assemblies in accordance with exemplary embodiments of the present invention are not exclusively limited to such use. Instead, the filter assemblies in accordance with exemplary embodiments of the present invention may be conveniently used to filter fluids used by various types of appliances.

The filter assemblies according to exemplary embodiments of the present invention are particularly advantageous when used to filter a fluid from microplastics contained therein, so as to prevent such microplastics from being recirculated in the appliance, and/or to reduce their environmental impact when the fluid is discharged from the appliance. However, it is emphasized that the filter assemblies according to exemplary embodiments of the present invention are not limited exclusively to filtering fluids from microplastics, but can be used to filter different types of contaminants, such as lint (e.g., wool and/or cotton microfibers released from textile articles during the washing thereof).

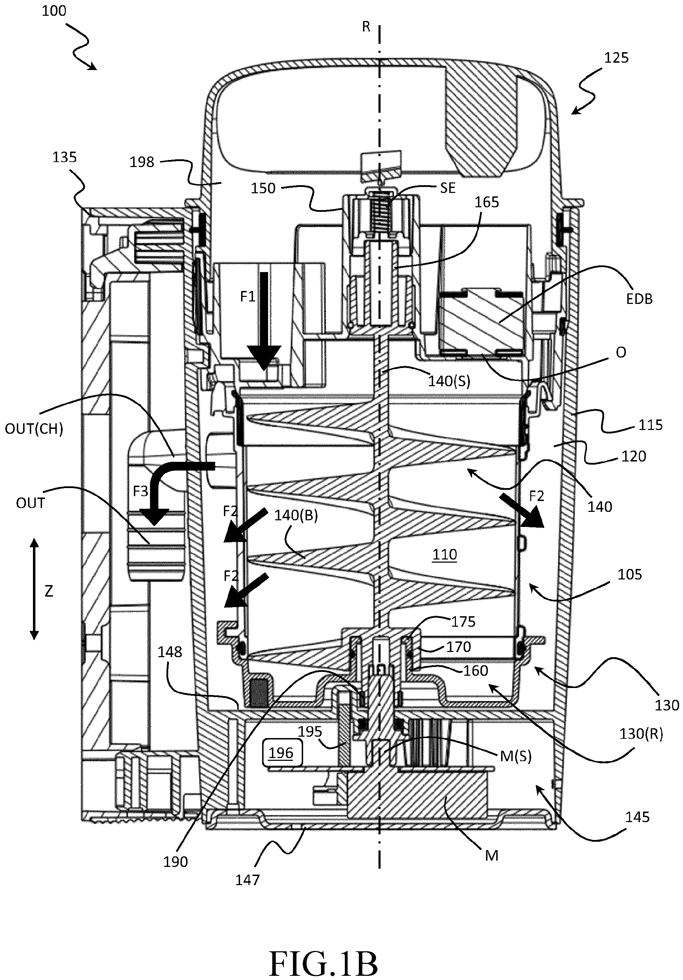

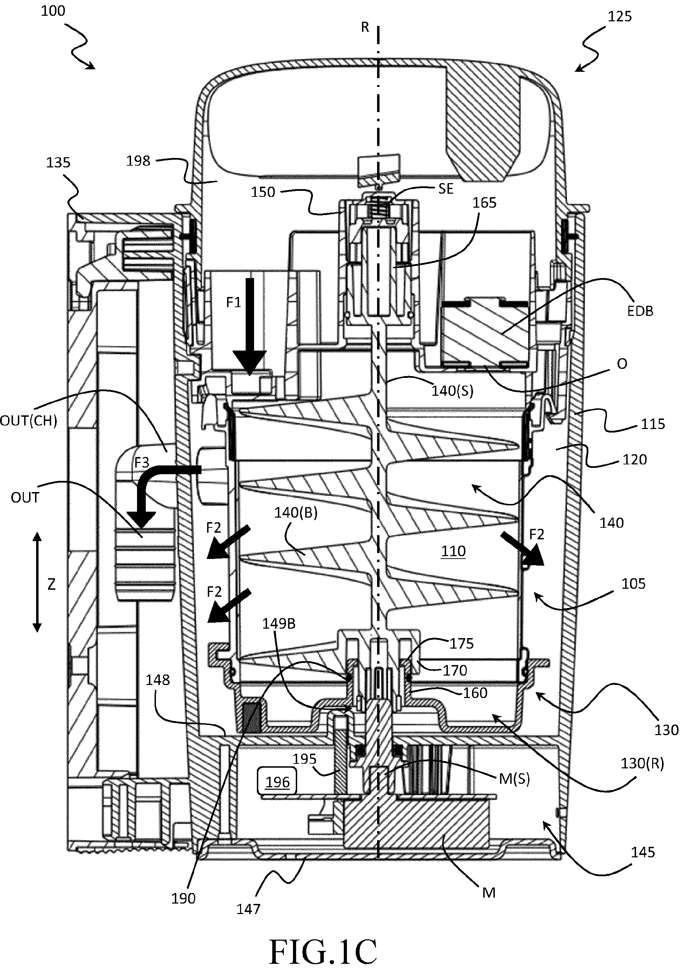

**Figure 1A** is an exploded view of a filter assembly **100** in accordance with a first exemplary embodiment of the present invention. **Figure 1B** is a sectional view of the filter assembly **100** in a first operating condition along a median sectional plane containing a vertical axis of the filter assembly **100.** **Figure 1C** is a sectional view of the filter assembly **100** in a second operating condition along the same sectional plane as **Figure 1B****.**

In the following, only those components of the filter assembly **100** deemed relevant to an understanding of the exemplary embodiment will be described.

In the following, directional terminology will be used - including terms such as above, below, in front, behind, central, lateral, upper, lower, ... - only to describe the filter assembly **100** according to a specific orientation of use thereof. The directional terminology used should therefore in no way be understood as absolute terminology. In particular, the directional terminology used herein will refer to the three orthogonal directions **X, Y, Z** which identify, respectively, a longitudinal direction, a transverse direction, and a vertical direction. According to the exemplary embodiment of the invention, the plane containing the **X** and **Y** directions identifies a rest surface (such as a floor) on which an appliance for washing laundry or textile articles according to the invention with which the filter unit **100** is associated lies during its operation.

According to the exemplary embodiment, the filter assembly **100** comprises a filtering element **105.**

According to the exemplary embodiment, the filtering element **105** comprises a filtering surface. According to the exemplary embodiment, such filtering surface comprises, for example, a mesh **105(M),** such as a possibly woven wire structure defining an open weave provided with uniformly spaced apertures. The filtering element **105,** and particularly the mesh **105(M),** may comprise a flexible material, which permits easy manipulation during cleaning operations. Without loss of generality, the mesh **105(M)** may be made of polyethylene or metallic material.

According to the exemplary embodiment, the mesh **105(M)** has a size (hereinafter referred to as the mesh size) such that it retains particles having a minimum size between 0.1 µm and 5 mm, preferably a minimum size between 10 µm and 100 µm, and more preferably a minimum size between 10 µm and 75 µm. According to the exemplary embodiment, the mesh size corresponds to the size of the apertures defined by the mesh.

This mesh size allows the filtration from a washing fluid of contaminants smaller than 5 mm, such as microplastic elements, such as, for example, microfilaments that detach from synthetic fabrics during a washing treatment, and/or lint, such as, for example, wool and/or cotton microfibres from textile articles treated by the laundry or textile articles washing appliance contained in the liquid.

In accordance with the exemplary embodiment, the filtering element **105** comprises a frame **105(F)** (e.g., a rigid or semi-rigid frame) to provide structural strength to the filtering element **105.** Without loss of generality, the frame **105(F)** may be made of plastic, i.e., polymeric, or metallic material.

In accordance with the exemplary embodiment, the frame **105(F)** comprises horizontal and vertical frame portions that delimit a plurality of openings that expose respective portions of the mesh **105(M).**

According to the exemplary embodiment, the filtering element **105** has a general tubular shape. According to the exemplary embodiment, therefore, the filtering element **105** constitutes a so-called cartridge.

According to the exemplary embodiment, the filtering element **105** encloses an inlet chamber **110** suitable for receiving (from the laundry or textile articles washing appliance) the fluid to be filtered.

According to the exemplary embodiment, the inlet chamber **110** corresponds to the internal, in particular cylindrical, volume of the filtering element **105.**

In accordance with the exemplary embodiment, a main dimension of the inlet chamber **110** extends along the **Z** direction, or, in other words, the major extent of the inlet chamber **110** is along the **Z** direction. This results in a generally vertical orientation of the filter assembly **100.** For this reason, the filter assembly **100** illustrated in **Figures 1A** - **1C** will also be referred to as a vertical filter assembly to distinguish it from embodiments of the present invention wherein the major extent of the inlet chamber **110** is along a horizontal direction, i.e., perpendicular to the **Z** direction.

In accordance with the exemplary embodiment, the filter assembly **100** comprises an inlet **IN** (visible in **Figure 1A**) through which fluid is supplied to the inlet chamber **110.**

According to the exemplary embodiment, the inlet **IN** of the filter assembly **100** is adapted to be coupled to a conduit **C** of the laundry or textile washing appliance to receive the fluid to be filtered therefrom. For example, the conduit **C** may be part of a fluid recirculation system of the laundry or textile articles washing appliance configured to cyclically recirculate fluid in the appliance by taking it from a region of a hydraulic circuit and returning it to the same region, or the conduit **C** may be part of a drain system of the appliance configured to discharge the fluid into a drain external to the appliance.

In accordance with the exemplary embodiment, the filter assembly **100** includes an inlet channel (not visible in the figures) for channeling fluid from the inlet **IN** to the inlet chamber **110.**

In a normal operating condition of the filter assembly **100,** the fluid is supplied, in particular through the conduit **C,** the inlet **IN** and the inlet channel to the inlet chamber **110** and it is then filtered by passing through the filtering surface, i.e. the mesh **105(M),** of the filtering element **105.**

The flow of the fluid reaching the inlet chamber **110** through the inlet **IN** is graphically indicated in **Figure 1B** by the arrow identified with the reference **F1.**

In accordance with the exemplary embodiment, the filter assembly **100** includes a filter housing **115** adapted to house the filtering element **105.**

According to the exemplary embodiment, the filter housing **115** has a generally tubular shape, such as a generally cylindrical shape.

According to the embodiment, the filter assembly **100** includes an outlet chamber **120** (visible in **Figures 1B-1C**) defined by a volume between the filtering element **105** and the filter housing **115** when the filtering element **105** is housed in the filter housing **115.** The outlet chamber **120** receives the filtered fluid resulting from the passage of the fluid from the inlet chamber **110** through the filtering surface of the filtering element **105.**

In the embodiment considered, in which the filtering element **105** and the filter housing **115** have a generally tubular shape, the outlet chamber **120** has a generally hollow cylindrical shape.

The flow of fluid reaching the outlet chamber **120** passing through the filtering surface of the filtering element **105** is indicated in **Figure 1B** by the arrows identified with the reference **F2.**

In accordance with the exemplary embodiment, the filter assembly **100** includes an outlet **OUT** (visible in **Figures 1B** and **1C**) through which the filtered fluid from the outlet chamber **120** is discharged.

In accordance with the exemplary embodiment, the outlet **OUT** of the filter assembly **100** is adapted to be coupled to a conduit **C'** of the appliance to supply the filtered fluid outside the filter assembly **100.** For example, the conduit **C'** may be part of a fluid recirculation system of the laundry or textile articles washing appliance configured to recirculate the filtered fluid in the appliance or the conduit **C'** may be part of a drain system of the laundry or textile articles washing appliance configured to discharge the filtered fluid into a drain external to the appliance.

According to the exemplary embodiment, the filter assembly **100** comprises an outlet channel **OUT**(**CH**) (visible in **Figures 1B** - **1C**) to convey the filtered fluid from the outlet chamber **120** to the outlet **OUT** and then, through the conduit **C',** such filtered fluid is recirculated in the appliance for washing laundry or textile articles (discharged into a drain external to the appliance).

The flow of filtered fluid exiting the outlet chamber **120** through the outlet channel **OUT**(**CH**) and the outlet **OUT** is graphically indicated in **Figure 1C** by the arrow identified with the reference **F3.**

According to the exemplary embodiment, the filter assembly **100** comprises a filter head **125.** According to the exemplary embodiment, the filter head **125** is adapted to at least partially close, from above, the filter housing **115.**

According to the exemplary embodiment, the filter head **125** comprises a body **125**(**B**).

According to the exemplary embodiment, the filter head **125** comprises a cover **125**(**C**) configured to close the body **125**(**B**) from above.

According to the exemplary embodiment, the cover **125**(**C**) includes a handle portion **125**(**H**) for handling the filter head **125** .

In the exemplary embodiment, the cover **125**(**C**) and the body **125**(**B**) are mateable to each other, for example in a removable manner. Without loss of generality, the cover **125**(**C**) and the body **125(B)** are mateable to each other by means of snap connections and/or screws (not shown). In alternative embodiments, the cover **125**(**C**) and the body **125**(**B**) may be made in a single piece.

According to the exemplary embodiment, the filter element **105** and the filter head **125** are mateable to each other in a removable manner.

According to the exemplary embodiment, the body **125**(**B**) comprises, for example, in a lower portion thereof, one or more respective retention elements **125**(**R**), and the filtering element **105** comprises, for example, in an upper end thereof, a collar **105**(**C**) provided with respective retention elements **105**(**R**). According to the exemplary embodiment, the filtering element **105** and the filter head **125** are mateable with each other by means of a bayonet connection, for example by inserting the collar **105**(**C**) of the filtering element **105** into the body **125**(**B**), and rotating the filter head **125,** or only the body **125**(**B**), when the cover **125**(**C**) and the body **125**(**B**) are decoupled from each other, around their axis so that the retaining elements **105**(**R**), **125**(**R**) come into contact with each other and corresponding retaining surfaces engage each other.

According to the exemplary embodiment, the body **125**(**B**) houses within it the inlet channel (not visible in the figures) for channeling the fluid from the inlet **IN** to the inlet chamber **110** when the filter head **125** is connected to the filter housing **115.**

In accordance with the exemplary embodiment, the filter assembly **100** includes a filter base **130.**

According to the exemplary embodiment, the filter base **130** has the shape of a cup (or lid, or cap) that inferiorly delimits a hollow space.

In accordance with the exemplary embodiment, the filter base **130** is adapted to be removably coupled to a lower portion of the filtering element **105.** For example, the filter base **130** is coupled to the filtering element **105** by snap connections, bayonet connections, or tightening elements such as screws. The filter base **130** may also be coupled to the filtering element **105** by threaded coupling elements, preferably provided on both the filter base **130** and the filtering element **105** to allow the filter base **130** to be screwed onto the filtering element **105.**

In the exemplary embodiment, the mating between the filter base **130** and the filtering element **105** defines a collection region **130**(**R**) for collecting accumulations of debris, such as hair, scale, lint, and so on.

As will be described in greater detail in the following, in accordance with the exemplary embodiment, the collection region **130**(**R**) may further act as a collection region for collecting contaminants, such as microplastics, removed from the filtering surface of the filtering element **105** by a cleaning system of the filtering element **105.**

In accordance with the exemplary embodiment, the filter assembly **100** may comprise a fixation support **135** adapted to secure the filter housing **115** to a vertical wall, not shown in the figures. Without loss of generality, the fixation support **135** may be omitted in alternative embodiments, wherein the filter assembly may be configured to be freely positioned by the user, such as by placing it on the top cover of the outer casing of the laundry or textile article washing appliance . Alternatively, the filter assembly may be an internal component of the laundry or textile articles washing appliance itself.

According to the exemplary embodiment, the fixation support **135** can be fixed to the wall by means of suitable fixing devices (not shown), such as threaded screws.

According to the exemplary embodiment, the filter housing **115,** or the filtering element **105,** the filter housing **115,** the filter head **125,** and the filter base **130** in their assembled configuration, may be removably couplable to the attachment bracket **135,** so as to be easily removable from the fixation support **135** when necessary, such as during cleaning operations.

According to the exemplary embodiment, the fixation support **135** comprises an upper engaging member **135**(**U**) adapted to engage, for example by snap connections, an upper connector of the filter housing **115** (not illustrated), and a lower engaging member **135**(**L**) adapted to engage, for example by snap connections, a lower connector of the filter housing **115** (not illustrated).

According to the exemplary embodiment, when the filter housing **115** is fixed to the fixation support **135,** a cavity (not shown) is formed between a rear outer surface of the filter housing **115** and the fixation support **135** for the passage of the conduits **C, C'** and their connections to the inlet **IN** and outlet **OUT** of the filter assembly **100.**

In accordance with the exemplary embodiment, the filter assembly **100** includes a cleaning system operable to remove contaminants such as microplastics, from the filtering surface, i.e., the mesh **105**(**M**) of the filtering element **105,** that have accumulated over time as a result of the filtering of the fluid used by the laundry or textile articles washing appliance through such surface.

In accordance with the exemplary embodiment, the cleaning system comprises a scraper device **140** housed in the inlet chamber **110.**

According to the exemplary embodiment, the scraper device **140** is configured to be rotated, relative to the inlet chamber **110,** about a rotation axis **R** parallel to the **Z** direction.

According to the exemplary embodiment, the scraper device **140** is configured to mechanically interact with (the inner side of) the filtering surface, i.e., the mesh **105**(**M**), of the filtering element **105,** in particular with the inner side of the filtering surface, so as to scrape the filtering surface of the filtering element **105** during rotation about the rotation axis **R.** As a result of the scraping action exerted by the rotation of the scraper device **104** within the inlet chamber **110,** contaminants accumulated on the filtering surface are removed from the surface itself.

In accordance with the exemplary embodiment, the scraper device **140** is further configured to move the removed contaminants from the inlet chamber **110** to the collection region **130**(**R**). In this manner, the removed contaminants are collected in the collection region **130**(**R**). Since the filter base **130** is removable from the filtering element **105,** the contaminants accumulated in the collection region **130**(**R**) can then be easily extracted and properly disposed of, dramatically reducing the environmental impact thereof.

According to the exemplary embodiment, the scraper device **140** comprises an endless screw element, such as an Archimedean screw, comprising a blade **140**(**B**), for example, a helical blade, which develops around a central support rod **140**(**S**) integral therewith and extending along the rotation axis **R.** In other embodiments, instead of a blade or in addition to it, the scraper device **140** may be provided with brush elements which interact mechanically with the filtering surface **105**(**M**).

In the exemplary embodiment, rotation of the scraper device **140** is achieved by rotating the rod **140**(**S**), which rotation causes a consequent rotation of the blade **140**(**B**) associated with the rod **140**(**S**). The filtering surface of the filtering element **105** is then scraped by the blade **140**(**B**), which during rotation mechanically interacts with such surface. Contaminants removed from the filtering surface of the filtering element **105** by the scraping action of the blade **140**(**B**) are further guided towards the collection region **130**(**R**) by the helical shape of the blade **140**(**B**) itself during rotation.

According to the exemplary embodiment, the filter assembly **100** comprises an electric motor **M** configured to rotate the scraper device **140** about the rotation axis **R.**

According to the exemplary embodiment, the electric motor **M** is installed in a motor housing **145** located in a lower portion of the filter housing **115** delimited along the **Z** direction by two walls **147, 148.**

According to the exemplary embodiment, the wall **147** supports the electric motor **M** at the bottom. The wall **147** can be removably coupled to the filter housing **115,** for example, by snap-fit, bayonet-fitting elements, or by tightening screws, so as to allow access to the motor housing **145,** for example to inspect the electric motor **M.**

According to the exemplary embodiment, the wall **148** covers the electric motor **M** from above along the direction **Z.** When the filtering element **105** is housed in the filter housing **115,** the wall **148** is therefore positioned between the lower portion of the filter element **105** (in particular, the filter base **130**) and the electric motor **M.**

According to the exemplary embodiment, the electric motor **M** comprises a drive shaft **M**(**S**) configured to be rotatably coupled to the rod **140**(**S**) of the scraper device **140** - when the filtering element **105** is housed in the filter housing **115** through a hole **149A** (visible in **Figure 1A**) made in the wall **148** and through a hole **149B** (visible in **Figure 1B**) made in the filter base **130.** In this way, when the filtering element **105** is housed in the filter housing **115,** the rotation of the drive shaft **M**(**S**) is transmitted to the rod **140**(**S**), and therefore the scraper device **140** rotates about the rotation axis **R.**

According to the exemplary embodiment, the scraper device **140** is configured to be movable relative to the filtering element **105** along the rotation axis **R.**

In this regard, according to the exemplary embodiment, the filter assembly **100** comprises a first guide element **150** and a second guide element **160** (visible in **Figures 1B** - **1**C) coupled or coupleable with the filtering element **105** and capable of slidingly engaging, along the rotation axis **R,** a first end **165** and a second end **170,** respectively, of the scraper device **140.**

According to the exemplary embodiment, the first guide element **150** is a sleeve located in a central portion of the body **125**(**B**) of the filter head **125** and defining a cylindrical cavity extending along the rotation axis **R.**

According to the exemplary embodiment, the first end **165** of the scraper device **140** comprises an upper end of the rod **140**(**S**) suitable for being engaged in the first guide element **150.**

According to the exemplary embodiment, the second guide element **160** is a sleeve located in a central portion of the filter base **130,** and defining a cylindrical cavity extending along the rotation axis **R.** According to the exemplary embodiment, the second guide element **160** is arranged such that the cylindrical cavity of the second guide element **160** is arranged coaxially to the bore **149B** of the filter base **130.**

According to the exemplary embodiment, the second end **170** of the scraper device **140** comprises a lower end of the rod **140**(**S**) adapted to be engaged in the second guide element **160.** The lower end of the rod **140**(**S**) is further configured to rotatably couple to the drive shaft **M**(**S**) of the electric motor **M** to enable the aforementioned rotational transmission between the drive shaft **M**(**S**) and the rod **140**(**S**).

When the first end **165** of the scraper device **140** is housed in the first guide element **150** and the second end **170** is housed in the second guide element **160 ,** the scraper device **140** is then free to rotate about the rotation axis **R** and at the same time to translate along the rotation axis **R.** According to the exemplary embodiment, the extensions, along the rotation axis **R,** of the cylindrical cavities defined by the guide elements **150** and **160** are appropriately configured so as to prevent the ends **165, 170** of the rod **140**(**S**) from coming out of the respective guide elements **150** and **160** as a result of translation along the rotation axis **R** as long as the filter head **125** remains coupled to the filter housing **115.**

According to the exemplary embodiment, the scraper device **140** is configured to be moved, relative to the filtering element **105** and within the guide elements **150, 160,** along the rotation axis **R** by a pushing action exerted by the contaminants accumulated in the collection region **130**(**R**) of the filtering element **105.**

In particular, when the contaminants accumulated in the collection region **130**(**R**) are in such an amount as to reach, starting from the bottom of the collection region **130**(**R**), i.e. starting from the bottom surface of the filter base **130,** the lower end of the blade **140**(**B**), i.e. the terminal end of the blade **140**(**B**) proximal to the lower end of the rod **140**(**S**), such an amount of contaminants can exert an upward thrust action. Such thrust action is directed in the direction of a reaction force exerted by the contaminants on the lower end of the blade **140**(**B**) in reaction to the thrust, in particular directed downwards, exerted by the lower portion of the blade **140**(**B**), the thrust action exerted by the contaminants is such as to push the scraper device **140,** along the rotation axis **R,** towards the filter head **125.**

Figure **1B** illustrates the filter assembly **100** with the scraper device **140** in a start-of-stroke condition (or lowered condition), where the scraper device **140** has the second end **170** which is supported on corresponding support elements **175** formed on the filter base **130.** This condition corresponds to the case where the collection region **130**(**R**) does not contain contaminants, or the amount of contaminants present in the collection region **130**(**R**) is not sufficient to cause a displacement of the scraper device **140** (along the rotation axis **R**) towards the filter head **125.** In the exemplary embodiment, the scraper device **140** is configured such that, in the start-of-stroke condition, the lower end of the blade **140**(**B**) is at least partially included in the collection region **130**(**R**), i.e., it is at such a height (along the **Z** direction) that it is at least partially included in the volume enclosed by the filter base **130.** It is particularly advantageous to provide a scraper device **140** that, when mounted in the filter assembly **100** and in the condition in which the collection region **130**(**R**) is empty, i.e. not containing contaminants, extends inside the collection region for a length, measured along the rotation axis **R,** of between 1 mm and 10 mm, preferably of between 1 mm and 5 mm. According to a further sizing procedure of the scraper device **140,** its shape can be defined in such a way that, when the scraper device **140** is mounted in the filter assembly **100,** and in the condition in which the collection region **130**(**R**) is empty, i.e. not containing contaminants, the volume occupied by the scraper device **140,** within the collection region **130**(**R**) is between 5% and 25% of the volume of the collection region **130**(**R**), preferably between 5% and 15% of the volume of the collection region **130**(**R**), more preferably between 5% and 10% of the volume of the collection region **130**(**R**). The different size ranges or percentage ranges defined above for the linear penetration of the scraper device **140** into the collection region **130**(**R**) or for the percentage of volume occupancy of the collection region **130**(**R**) by the scraper device **140** may be applied based on the desired sensitivity of sensing of the displacement of the scraper device **140** along its rotation axis **R** caused by the accumulation of contaminants in the collection region **130**(**R**).

Figure **1C** illustrates the filter assembly **100** with the scraper device **140** in a raised condition, where the scraper device **140** has been pushed towards the filter head **125** by the presence of a sufficient amount of contaminants accumulated in the collection region **130**(**R**), and the second end **170** no longer rests on the support members **175.**

The amount of contaminants accumulated in the collection region **130**(**R**) required to push, in particular towards the filter head **125,** the scraper device **140** along the rotation axis **R** may depend on one or more of the following factors:
- the geometry of the collection region **130**(**R**), that is, of the filter base **130;**
- the geometry of the scraper device **140,** and in particular of the lower end of the blade **1**4**0(**B**)**;
- the distances between the bottom of the collection region **130**(**R**) and the lower end of the blade **140**(**B**) of the scraper device **140.**

In the exemplary embodiment illustrated in **Figures 1A-1C****,** the collection region **130**(**R**) is shaped in such a way as to allow for an accumulation of contaminants that does not initially generate any pushing action on the scraper device **140,** since the contaminants initially accumulate along peripheral portions of the filter base **130** which are distant, both in the **Z** direction and in the **X** and **Y** directions, from the lower end of the blade **140**(**B**). In this exemplary embodiment, the pushing action on the scraper device **140** can only occur following a sufficient accumulation of contaminants in the collection region **130**(**R**) such that the accumulated mass of contaminants actually reaches the lower end of the blade **140**(**B**).

Other configurations are possible, in which the collection region **130**(**R**) and the scraper device **140** are shaped in such a way that the scraper device **140** is subjected to a pushing action as soon as contaminants reach the collection region **130**(**R**). For example, the scraper device **140** may be equipped with a blade **140**(**B**) that extends downwards until it touches/grazes, in the start-of-stroke condition, the bottom of the collection region **130**(**R**) where the contaminants removed from the filtering surface of the filtering element **105** firstly accumulate.

It is also emphasized that the amount of contaminants accumulated in the collection region **130**(**R**) required to push the scraper device **140,** in particular towards the filter head **125,** can be influenced by the characteristics of the accumulated contaminants, such as for example one or more of:
- size of contaminant particles;
- shape of contaminant particles;
- overall shape of the accumulated mass of contaminants;
- degree of compactness of the mass of accumulated contaminants;
- moisture absorbed by contaminants;
- presence of encrusted portions in the mass of accumulated contaminants.

For example, the mass of contaminants accumulated in the collection region **130**(**R**) may not be able to exert a sufficient reaction for a pushing action on the scraper device **140** if such a mass is not sufficiently compact. For this reason, before the mass of contaminants accumulated in the collection region **130**(**R**) can be able to push the scraper device **140,** it may be necessary for a greater quantity of contaminants to accumulate in the collection region **130**(**R**), and for the subsequent compaction of the same, for example exerted by the scraper device **140,** and in particular by the action exerted by the blade **140**(**B**) of the scraper device **140** on the mass of accumulated contaminants.

The pushing action exerted by the contaminants accumulated in the collection region **130**(**R**) on the scraper device **140** can generally vary over time due to the variation in the shape of the mass of contaminants accumulated in the collection region **130**(**R**). Such variation can be caused not only by the introduction of new contaminants removed from the filtering surface of the filtering element **105,** but also due to the interaction between the blade **140**(**B**) and the mass of contaminants accumulated in the collection region **130**(**R**) during the rotation of the scraper device **140** and the consequent mixing of the accumulated contaminants.

Furthermore, the compactness/hardness of the mass of contaminants accumulated in the collection region **130**(**R**), and therefore the ability of the latter to exert a pushing action on the scraping device **140,** can be influenced by the humidity absorbed by the mass of contaminants given by the passage of the appliance fluid within the filtering element **105.**

According to the exemplary embodiment, the filter assembly **100** includes a position sensor system configured to sense the position of the scraper device **140** along the rotation axis **R** and generate a corresponding position signal *PS* indicative of the sensed position.

According to the exemplary embodiment, the position sensor system comprises:
- magnetic elements **190** integral with the scraping device **140,** and
- a sensor **195** integral with the filtering element **105,** configured to measure the intensity of the magnetic field generated by the magnetic elements **190** and to generate the position signal *PS*.

The magnetic elements **190,** being integral with the scraper device **140,** move together with the scraper device **140** along the rotation axis **R** when the scraper device **140** is pushed by the contaminants accumulated in the collection region **130**(**R**). The more the scraper device **140** is displaced, in particular towards the filter head **125,** the greater the distance between the magnetic elements **190** and the sensor **195,** and, consequently, the lower the magnetic field intensity measured by the sensor **195.** In general, the magnetic field strength measured by the magnetic field sensor **195** has a maximum value when the scraper device **140** is in the start-of-stroke condition (**Figure 1B**), and takes a value less than the maximum value when the scraper device **140** is in a raised condition ( **Figure 1C**), with this value decreasing as the position of the scraper device **140** moves from its position in the start-of-stroke condition.

According to the exemplary embodiment, the sensor **195** is configured to generate the position signal *PS* based on the measured magnetic field strength. Without loss of generality, the position signal *PS* may be an analog signal, e.g., directly or inversely proportional to the measured magnetic field strength, or a digital signal.

In accordance with the exemplary embodiment, the magnetic elements **190** are located at the second end **170** of the scraper device **140,** e.g. coupled to or connected to the lower end of the rod **140**(**S**).

According to the exemplary embodiment, the sensor **195** is located at the wall **148** above the electric motor **M,** for example housed in a respective seat made in the wall **148.**

The positions of the magnetic elements **190** and the sensor **195** may however be different, for example with the magnetic elements **190** integral with the filter element **105** and the magnetic field sensor integral with the scraper device **140.**

Other types of position sensor systems may be used to sense the position of the scraper device **140** along the rotation axis **R,** such as capacitive, inductive, optical, piezoelectric position sensor systems, devices equipped with encoders, or potentiometers.

According to the exemplary embodiment, the filter assembly **100** comprises an output system, schematically illustrated in **Figures 1B** and **1C** with reference **196,** configured to receive the position signal *PS* and to output, based on the received position signal *PS*, a filter indication *IND* comprising one or more of the following indications:
- An indication regarding the amount of contaminants accumulated in the collection region **130**(**R**)**,** where such an amount is calculated on the basis of the value of the position signal *PS*, and hence of the actual position of the scraping device **140** along the rotation axis **R.**
- An indication regarding the filling (of contaminants) condition of the collection region **130**(**R**), e.g. in terms of predefined levels (e.g. "empty", "half full", "full") each corresponding to a respective predefined range of values of the position signal *PS* and thus, e.g., to a respective range of positions of the scraper device **140** along the rotation axis **R.**
- An indication of the need to empty the collection region **130**(**R**), generated, for example, when the position signal *PS* has reached a predefined threshold value corresponding to a predefined position of the scraper device **140** along the rotation axis **R.**

The filter indication *IND* provided by the output system **196** may be provided in the form of visual indications, for example by the illumination of appropriate lamps (not shown) or the display of messages on display elements such as displays (not shown).

The filter indication *IND* provided by the output system **196** may also, or instead, be provided in the form of audible indications, such as through the generation of audio alerts.

The filter indication *IND* provided by the output system **196** may also, or instead, be provided in the form of a signal (digital or analog) to be sent to an external device, such as a smartphone equipped with an appropriate application capable of interacting with the output system **196,** or to be sent to a control unit of the laundry or textile articles washing appliance to which the filter assembly **100** is hydraulically connected.

According to another embodiment not illustrated, the output system **196** can be external to the filter assembly **100,** for example located at the laundry or textile articles washing appliance to which the filter assembly **100** is hydraulically connected, and communicatively coupled with the position sensor system, for example, with the sensor **195,** of the filter assembly **100** to receive the position signal *PS*.

In accordance with the exemplary embodiment, the filter assembly **100** includes a biasing member associated with the scraper device **140** and configured to counteract the pushing action exerted on the scraper device **140** by contaminants accumulated in the collection region **130**(**R**) of the filtering element **105.**

In accordance with the exemplary embodiment, the biasing element comprises a spring **SE** located in the filter head **125** and provided to push the scraper device **140** away from the filter head **125** along the rotation axis **R.**

According to the exemplary embodiment, the spring **SE** is positioned at least partially inside the first guide element **150** coaxially with the scraper device **140,** and in particular with the rod **140**(**S**).

In accordance with the exemplary embodiment, the spring **SE** is configured to contact the first end **165** of the scraper device **140.**

According to the exemplary embodiment, when the scraper device **140** is in the (lowered) start-of-stroke condition illustrated in **Figure 1B****,** the pushing action towards the filter base **130** exerted by the spring **SE** on the scraper device **140** is such as to keep the second end **170** of the scraper device **140** firmly abutting the support elements **175** of the filter base **130.** In this way, unwanted oscillations of the scraper device **140** along the rotation axis **R** are advantageously avoided, or significantly reduced, which would lead to uncontrolled oscillations of the position signal *PS* and therefore to incorrect evaluations of the quantity of contaminants accumulated in the collection region **130**(**R**).

According to the exemplary embodiment, in order to cause the scraper device **140** to move from the (lowered) start-of-stroke condition illustrated in **Figure 1B** to a raised condition such as that illustrated in **Figure 1C****,** the pushing action exerted by the contaminants accumulated in the collection region **130**(**R**) must be strong enough to overcome the counter-push exerted by the spring **SE.**

According to the exemplary embodiment, the filter assembly **100** further comprises a flooding chamber **198** separated from the inlet chamber **110** and in fluid connection with the outlet chamber **120.**

In the exemplary embodiment, the flooding chamber **198** is located above, along the **Z** direction, the inlet chamber **100.** For example, the flooding chamber **198** is part of the body 12**5**(**B**) of the filter head **125.**

According to the exemplary embodiment, the filter assembly **100** includes an emergency fluid connection device for selectively enabling and disabling a fluid connection (hereinafter, emergency fluid connection) between the inlet chamber **110** and the flooding chamber **198** based on a condition of the inlet chamber **110,** e.g., the pressure of the fluid contained in the inlet chamber **110.** Hereinafter, whenever the term "emergency fluid connection" is mentioned, it means the fluid connection or fluid communication, i.e., the ability or capacity of fluid to pass or flow, between the inlet chamber **110** and the flood chamber **198.**

According to the exemplary embodiment, the emergency fluid connection device is configured to allow emergency fluid connection in the presence of a blockage of the inlet chamber **110,** thereby allowing unfiltered fluid to flow to the outlet **OUT.** This helps to avoid interruption of fluid flow by the clogged filter assembly **100,** and thus prevents malfunction of the laundry or textile washing equipment connected thereto. Furthermore, fluid is prevented from overflowing from the filter assembly **100** and falling onto the floor, thereby flooding the room in which the laundry or textile articles washing appliance is located.

According to the exemplary embodiment, the emergency fluid connection device comprises a movable body **EDB** (hereinafter referred to as emergency movable body) configured to take a closed position and an open position to disable or enable, respectively, the emergency fluid connection by closing/opening an opening **O** located on a wall separating the inlet chamber **110** and the flooding chamber **198.**

According to the exemplary embodiment, the enabling of the emergency fluid connection by the emergency movable body **EDB** occurs in the presence of a blockage of the inlet chamber **100** to allow the fluid to flow from the inlet **IN** to the flooding chamber **198** and, then, to the outlet **OUT,** through the inlet chamber **110** passing through the opening **O,** and the disabling of the emergency fluid connection by the emergency movable body **EDB** occurs when there is no blockage of the inlet chamber **110** to separate, from the fluid dynamic point of view, the flooding chamber **198** from the inlet chamber **110.**

According to the exemplary embodiment, the emergency movable body **EDB** is located above the opening **O**, and is movable relative to the filter housing **115** and the body **125**(**B**) of the filter head **125** along the vertical direction **Z.**

According to the exemplary embodiment, the emergency movable body **EDB** takes the open position by moving upwards and freeing the opening **O** due to the pressure exerted on the emergency movable body **EDB** by the fluid accumulated in the inlet chamber **110** when the inlet chamber **110** is in a clogged condition, i.e. when the fluid is no longer able to pass through the filtering surfaces of the filtering element **105.**

According to the exemplary embodiment, the emergency movable body **EDB** takes the closed position, occluding the opening **O,** when the inlet chamber **110** is in an unclogged condition, i.e. when the fluid is able to pass through the filtering surfaces of the filtering element **105,** and therefore the pressure exerted on the emergency movable body **EDB** by the fluid accumulated in the inlet chamber **110** is not sufficient to overcome the gravitational force acting on the emergency movable body **EDB.**

In the exemplary embodiment, a position sensor (not shown) may detect the position of the emergency movable body **EDB,** and notify the output system **196** of that position. In this manner, the output system **196** may report a clogged filter condition when the detected position of the emergency movable body **EDB** corresponds to the open position.

It is emphasized that the concepts of the present invention can however be applied to the case where the flooding chamber **198** and the emergency fluid connection device comprising the movable body **EDB** are not present.

**Figures 2A** and **2B** are two sectional views along two different sectional planes that include the rotation axis **R** of a filter assembly **200** in accordance with a second exemplary embodiment of the present invention.

The filter assembly **200** is structurally and functionally analogous to filter assembly **100.** Accordingly, features, implementations, generalizations, examples and variants of the filter assembly **200,** and its components or parts, which are present in filter assembly **100,** are identified with the same references and will not be discussed further.

According to the exemplary embodiment, the filter assembly **200** comprises the filtering element **105** enclosing the inlet chamber **110,** provided with filtering surface, and the filter housing **115,** and the outlet chamber **120** defined by the volume between the filtering element **105** and the filter housing **115.**

In the exemplary embodiment, the filter assembly **200** includes the inlet (visible in **Figure 2A**) through which fluid is supplied to the inlet chamber **110,** and the outlet (visible in **Figure 2A**) through which fluid, filtered, is discharged from the outlet chamber **120.** Also visible in **Figure 2A** is the inlet channel, identified with the reference **IN**(**CH**), which was not visible in **Figures 1A** - **1C** relating to the filter assembly **100,** for channeling the fluid from the inlet **IN** to the inlet chamber **110.**

According to the exemplary embodiment, the filter assembly **200** comprises the filter head **125** which houses, among other things, the inlet channel **IN**(**CH**).

According to the exemplary embodiment, the filter assembly **200** comprises the filter base **130,** the coupling of which with the filtering element **105** defines the collection region **130**(**R**).

In accordance with the exemplary embodiment, the filter assembly **200** includes the fixation support **135** for fixing the filter housing **115** to a vertical wall.

According to the exemplary embodiment, the inlet chamber **110** comprises a first inlet chamber portion **210,** or main inlet chamber, and a second inlet chamber portion **220,** or auxiliary inlet chamber.

According to the exemplary embodiment, the main inlet chamber **210** is in fluid communication with the inlet **IN** to receive the fluid to be filtered. According to the exemplary embodiment, the main inlet chamber **210** corresponds to the lower portion, along the **Z** direction, of the inlet chamber **110** coupled to the filter base **130.**

According to the exemplary embodiment, the auxiliary inlet chamber **220** is located above, along the **Z** direction, the main inlet chamber **210,** and corresponds to the upper portion, along the **Z** direction, of the inlet chamber **110,** i.e. the portion thereof closest to the filter head **125.**

In accordance with the exemplary embodiment, the auxiliary inlet chamber **220** is separated from the main inlet chamber **210** by a separation wall **230** that extends substantially perpendicular to the **Z** direction within the inlet chamber **110.** In other words, the main inlet chamber **210** and the auxiliary inlet chamber **220** are defined by partitioning the inlet chamber **110** into two distinct portions by means of the separation wall **230.**

In accordance with the exemplary embodiment, the filter assembly **200** comprises a cleaning system comprising a scraper device **240** in the inlet chamber **110,** similar to the scraper device **140** of the filter assembly **100,** but located only within the main inlet chamber **210,** and configured to be rotated by the electric motor **M** about the rotation axis **R** so as to scrape the filtering surface of the portion of the filtering element **105** corresponding to the main inlet chamber **210,** to remove accumulated contaminants therefrom, and to move the removed contaminants to the collection region **130**(**R**)**.**

Similarly to the scraper device **140** of the filter assembly **100,** the scraper device **240** according to the exemplary embodiment comprises an endless screw element, such as an Archimedean screw, comprising a blade **240**(**B**), for example, a helical blade, which develops around a central support rod **240**(**S**) integral therewith and extends along the rotation axis **R.** In other embodiments, instead of a blade, or in addition to it, the scraper device **240** may be provided with brush elements that interact mechanically with the filtering surface.

Similarly to the scraper device **140** of the filter assembly **100,** the scraper device **240** is configured to be movable relative to the filtering element **105** along the rotation axis **R.**

In this regard, according to the exemplary embodiment, the filter assembly **200** comprises a first guide element **250** and a second guide element **260** coupled or coupleable with the filtering element **105** and adapted to slidably engage - along the rotation axis **R** - a first end **265** and a second end **270,** respectively, of the scraper device **240.**

According to the exemplary embodiment, the first guide element **250** is a sleeve located in a central portion of the separation wall **230** and defining a cylindrical cavity that extends along the rotation axis **R,** i.e. perpendicularly to the separation wall **230** itself.

According to the exemplary embodiment, the first end **265** of the scraper device **240** comprises an upper end of the rod suitable for being engaged in the first guide element **250.**

According to the exemplary embodiment, the second guide element **260** is a sleeve located in a central portion of the filter base **130,** and defining a cylindrical cavity extending along the rotation axis **R.**

According to the exemplary embodiment, the second end **270** of the scraper device **240** comprises a lower end of the rod adapted to be engaged in the second guide member **260.** The lower end of the rod is further configured to rotatably couple to the drive shaft of the electric motor **M** to enable rotational transmission between the drive shaft of the electric motor **M** and the rod of the scraper device **240.**

When the first end **265** of the scraper device **240** is housed in the first guide element **250** and the second end **270** is housed in the second guide element **260,** the scraper device **240** is then free to rotate about the rotation axis **R** and at the same time to translate along the rotation axis **R.**

Similarly to the scraper device **140** of the filter assembly **100,** according to the exemplary embodiment, the scraper device **240** is configured to be moved, relative to the filtering element **105** and within the guide elements **250, 260,** along the rotation axis **R** by a pushing action exerted by the contaminants accumulated in the collection region **130**(**R**) of the filtering element **105.**

**Figures 2A** and **2B** illustrate the filter assembly **200** with the scraper device **240** in a raised condition, where the scraper device **240** has been pushed toward the filter head **125** by the presence of a sufficient amount of contaminants accumulated in the collection region **130**(**R**).

According to the exemplary embodiment, the filter assembly **200** comprises a position sensor system configured to sense the position of the scraper device **240** along the rotation axis **R and** generate a corresponding position signal *PS* indicative of the sensed position. In a manner similar to the scraper device **140** of the filter assembly **100,** the position sensor system comprises magnetic elements **190** integral with the scraper device **240,** and a sensor (not visible in **Figures 2A** and **2B**) integral with the filtering element **105,** configured to measure the intensity of the magnetic field generated by the magnetic elements **190** and to generate the position signal *PS*.

Similarly to the filter assembly **100,** according to the exemplary embodiment, the filter assembly **200** comprises the output system **196,** configured to receive the position signal *PS* and to output, based on the received position signal *PS*, a filter indication *IND* comprising one or more of
- an indication of the amount of contaminants accumulated in the collection region **130**(**R**);
- an indication regarding the filling (of contaminants) condition of the collection region **130**(**R**);
- an indication of the need to empty the collection region **130**(**R**).

In accordance with the exemplary embodiment, the filter assembly **200** includes an auxiliary fluid connection device for selectively enabling and disabling a fluid connection, hereinafter, auxiliary fluid connection, between the main inlet chamber **210** and the auxiliary inlet chamber **220,** based on a condition of the main inlet chamber **210,** for example, the pressure of the fluid contained in the main inlet chamber **210.** Hereinafter, whenever the term "auxiliary fluid connection" is mentioned, it will be understood as referring to the fluid connection or fluid communication, i.e., the ability or capacity of the fluid to pass or flow between the main inlet chamber **210** and the auxiliary inlet chamber **220.**

According to the exemplary embodiment, the auxiliary inlet chamber **220** is configured to receive fluid to be filtered from the inlet **IN** only when said auxiliary fluid connection is enabled.

According to the exemplary embodiment, the auxiliary fluid connection device is configured to allow the auxiliary fluid connection in the presence of a blockage of the main inlet chamber **210,** thus allowing the unfiltered fluid present in the main inlet chamber **210** to reach the auxiliary inlet chamber **220** and flow towards the outlet **OUT** through the filtering surface of the auxiliary inlet chamber **220.** This allows to continue to ensure, at least temporarily, and in particular as long as the auxiliary inlet chamber **220** is not blocked, a filtering of the fluid received from the inlet **IN** even when the main inlet chamber **210** is blocked.

Referring to **Figure 2B****,** according to the exemplary embodiment, the auxiliary fluid connection device comprises a movable body **ADB,** hereinafter referred to as the auxiliary movable body, configured to assume a closed position and an open position to disable or enable, respectively, the auxiliary fluid connection by closing/opening an opening **H** located on the separation wall **230** separating the main inlet chamber **210** and the auxiliary inlet chamber **220.**

According to the exemplary embodiment, the enabling of the auxiliary fluid connection by the auxiliary movable body **ADB** occurs when there is a blockage of the main inlet chamber **210** to allow the fluid to flow from the inlet **IN** to the auxiliary inlet chamber **220** and then to the outlet **OUT** through the filtering surface of the auxiliary inlet chamber **220,** through the main inlet chamber **210,** passing through the opening **H,** and the disabling of the auxiliary fluid connection by the auxiliary movable body **ADB** occurs when there is no blockage of the main inlet chamber **210,** so as to separate, from the fluid dynamic point of view, the main inlet chamber **210** from the auxiliary inlet chamber **220.**

According to the exemplary embodiment, the auxiliary movable body **ADB** is located above the opening **H**, and is movable relative to the filter housing **115** along the vertical direction **Z.**

According to the exemplary embodiment, the auxiliary movable body **ADB** takes the opening position by moving upwards and freeing the opening **H** due to the pressure exerted on the auxiliary movable body **ADB** by the fluid accumulated in the main inlet chamber **210** when this chamber is in a clogged condition, i.e. when the fluid is no longer able to pass through the filtering surfaces of the filter element **105** corresponding to the main inlet chamber **210.**

According to the exemplary embodiment, the auxiliary movable body **ADB** takes the closing position, occluding the opening **H,** when the main inlet chamber **210** is in an unclogged condition, i.e. when the fluid is able to pass through the filtering surfaces of the filtering element **105** at the main inlet chamber **210,** and therefore the pressure exerted on the auxiliary movable body **ADB** by the fluid accumulated in the main inlet chamber **210** is not sufficient to overcome the gravitational force acting on the auxiliary movable body **ADB.**

According to the exemplary embodiment, a position sensor (not shown) may detect the position of the auxiliary movable body **ADB,** and notify the output system **196** of that position. In this manner, the output system **196** may report a clogged main inlet chamber **210** condition when the detected position of the auxiliary movable body **ADB** corresponds to the open position.

In accordance with the exemplary embodiment, the auxiliary inlet chamber **220** has a capacity such as to allow filtering of a quantity of fluid sufficient to complete an operating cycle of the laundry or textile articles washing appliance . In this way, even if clogging of the main inlet chamber **210** is detected at the beginning of an operating cycle of the laundry or textile articles washing appliance, such cycle can be concluded while still ensuring filtering of the fluid.

Similarly to the filter assembly **100,** according to the exemplary embodiment, the filter assembly **200** includes a biasing element, including the spring **SE,** associated with the scraper device **240** and configured to counteract the pushing action exerted on the scraper device **240** by the contaminants accumulated in the collection region **130**(**R**).

According to the exemplary embodiment, the filter assembly **200** comprises the flooding chamber **198** with an emergency movable body (not visible in the figure but similar to the emergency movable body **EDB** of the filter assembly **100**) to selectively open/close an opening (not visible in the figure but similar to the opening **O** of the filter assembly **100**) located on a wall that separates the inlet chamber **110** and the flooding chamber **198,** and in particular that separates the auxiliary inlet chamber **220** and the flooding chamber **198.**

According to the exemplary embodiment, the emergency fluid connection device is configured to allow emergency fluid connection between the inlet chamber **110** and the flooding chamber **198,** and in particular between the auxiliary inlet chamber **220** and the flooding chamber **198,** in the presence of a blockage of both the main and the auxiliary inlet chambers **210, 220,** thus allowing unfiltered fluid to flow to the outlet **OUT.** This helps to avoid interruption of fluid flow by the clogged filter assembly **200,** and thus prevents malfunction of the laundry or textile articles washing appliance connected thereto. Furthermore, fluid is prevented from overflowing from the filter assembly **200** and falling onto the floor, thus flooding the room in which the laundry or textile articles washing appliance is located.

According to the exemplary embodiment, and similarly to what has been described in relation to the filter assembly **100,** the emergency movable body takes the opening position due to the pressure exerted on the emergency movable body by the fluid accumulated in the auxiliary inlet chamber **220** when the auxiliary inlet chamber **220** is in a clogged condition, this condition possibly occurring when the main inlet chamber **210** is also clogged, that is, when the fluid is no longer able to pass through the filtering surfaces of the filtering element **105** corresponding to the auxiliary inlet chamber **220.**

According to the exemplary embodiment, the emergency movable body takes the closing position when the auxiliary inlet chamber **220** is in an unclogged condition, i.e. when the fluid is able to pass through the filtering surfaces of the filtering element **105** corresponding to the auxiliary inlet chamber **220,** and therefore the pressure exerted on the emergency movable body by the fluid accumulated in the auxiliary inlet chamber **220** is not sufficient to overcome the gravitational force acting on the emergency movable body.

It should be noted that even for the filter assembly **200,** the flooding chamber **198** and the emergency fluid connection device may however not be present.

In the exemplary embodiment shown in **Figures 1A** - **1C** and the exemplary embodiment shown in **Figure 2****,** the main dimension of the inlet chamber **110** extends along the **Z** direction, thereby resulting in a generally vertical orientation of the filter assembly **100** and the filter assembly **200.**

However, as previously mentioned, embodiments are possible in which the prevailing extension of the inlet chamber **110** is along a horizontal direction, i.e. perpendicular to the **Z** direction.

For example, **Figure 3** is a sectional view of a filter assembly **300** in accordance with a third exemplary embodiment of the present invention, wherein the prevailing extension of the inlet chamber **110** is along the **Y** direction.

The filter assembly **300** is structurally and functionally similar to the filter assembly **100,** and has only some differences with respect to the latter.

For example, in the embodiment shown in **Figure 3****,** the filtering element **105,** and the filter base **130,** can be accessed by removing a cover member **325** mateable to one end of the filter housing **115** proximal to the side of the filtering element **105** coupled to the filter base **130.**

Furthermore, according to the exemplary embodiment, the filter head **125** is not present;

According to the exemplary embodiment, the electric motor **M** is coupled to a distal end of the filter housing **115** at the side of the filtering element **105** coupled to the filter base **130.**

According to the exemplary embodiment, the input **IN** extends parallel to the **Y** direction.

According to the exemplary embodiment, the filter housing **115** is provided with connection elements **CE** (only one visible in **Figure 3**) for connecting the filter assembly **300** to the laundry or textile articles washing appliance that supplies the fluid to be filtered. For example, the substantially horizontal extension of the filter assembly **300** makes it particularly advantageous to install the filter assembly **300** directly inside the laundry or textile articles washing appliance itself.

Although not visible in **Figure 3****,** the filter assembly **300** may also comprise a flooding chamber similar to the flooding chamber **198** of the filter assembly **100.** In this case, the emergency movable body for selectively enabling/disabling the emergency fluid connection between the inlet chamber **110** and the flooding chamber may advantageously be provided with a guiding device, for example, a bias element such as a spring, for the guided movement of the emergency movable body, in particular for disabling the emergency fluid connection, since the substantially horizontal extension of the filter assembly **300** may not allow the use of the force of gravity, as instead occurs for the emergency movable body **EDB** of the filter assembly **100** illustrated in **Figures 1B** and **1C****.**

Similarly, according to a further exemplary embodiment not illustrated, a filter assembly with a prevailing extension of the inlet chamber along the **Y** (i.e., horizontal) direction may have the inlet chamber comprising a main inlet chamber and an auxiliary inlet chamber, as in the filter assembly **200** illustrated in **Figure 2****.**

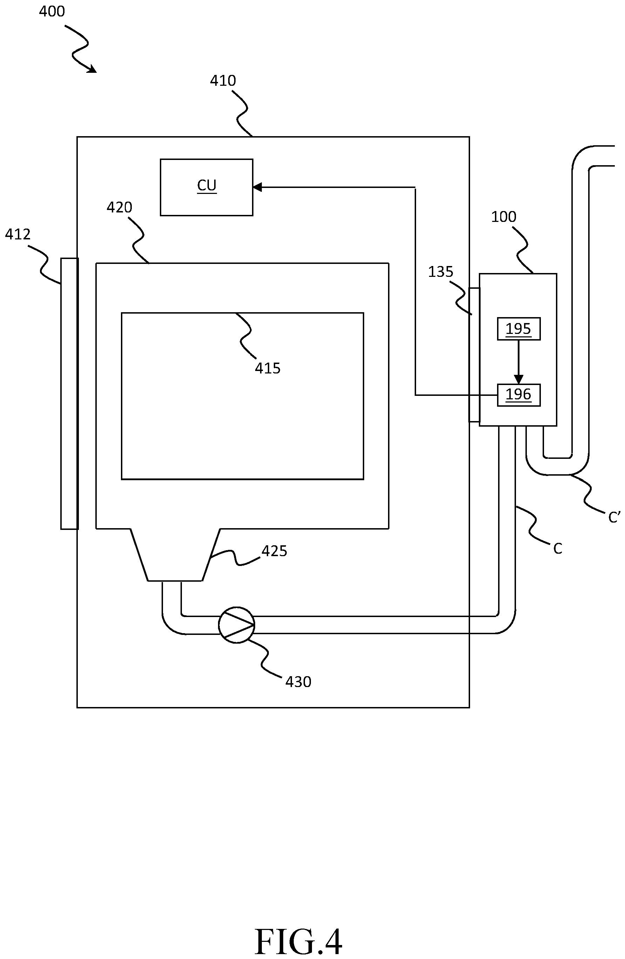

Figure **4** schematically illustrates an example of how a filter assembly according to the exemplary embodiments described, for example the filter assembly **100** illustrated in **Figures 1A** - **1C** can be connected to a washing appliance of laundry or textile articles, in particular a washing machine **400,** according to an exemplary embodiment.

According to the exemplary embodiment, the washing machine **400** comprises a casing **410** of substantially parallelepiped shape, containing hydraulic, electrical, mechanical, electronic, electromechanical components necessary for the operation of the washing machine **400.** In **Figure 4****,** only the components necessary for understanding the installation of the filter assembly **100** and its use will be illustrated.

According to the exemplary embodiment, a door **412** formed on a front side of the casing **410** allows selective access to a rotating perforated basket **415,** for example of substantially cylindrical shape, configured to receive textile articles (for example, clothes) to be treated, for example, washed or washed and dried.

According to the exemplary embodiment, the rotating basket **415** is housed in a washing tub **420,** for example of a substantially hollow cylindrical shape, configured to receive fluids comprising water and/or water mixed with chemical treatment agents for textile products (detergents, fabric softeners, dyes, stain removers, ...).

According to the exemplary embodiment, the washing tub **420** includes in the bottom portion thereof a sump **425** configured to collect by gravity the fluids introduced into the washing tub **420.**

In accordance with the exemplary embodiment, the laundry washing machine **400** includes a drain system for discharging fluid collected in the sump **425** into a drain external to the laundry washing machine **400.**

In accordance with the exemplary embodiment, such discharge system comprises a pump **430** in fluid connection with the sump and configured, when operated, to move fluid collected in the sump **425** to a conduit such as the conduit **C** illustrated in **Figure 1A****.**

According to the exemplary embodiment, the filter assembly **100** is fixed to the washing machine **400,** for example to the casing **410,** via the fixing support **135** (see **Figure 1A**), to receive the fluid to be filtered from the conduit **C.**

In accordance with the exemplary embodiment, referring jointly to **Figures 1A** - **1C** and **4,** the conduit **C** is connected to the inlet **IN** of the filter assembly **100** to supply fluid (to be filtered) pumped through the conduit **C** into the filtering element **105;** the fluid filtered by the filter assembly **100** is then supplied, through the outlet **OUT,** to the conduit **C'** to be discharged into an external drain of the washing machine **400** (not illustrated).

Referring again to **Figures 1A** - **1C** and **4,** according to the exemplary embodiment, the filter indication *IND* generated by the output system of the filter assembly **100** can also be advantageously provided, in the form of a digital or analog signal, to a control unit **CU** of the washing machine **400** coupled to exchange signals, for example by wired and/or wireless communication interface, with the output system **196** of the filter assembly **100.**

According to an exemplary embodiment not illustrated, the output system **196** may instead be provided in a portion of the washing machine **400** itself and coupled to exchange signals, for example by means of a wired and/or wireless communication interface, to the sensor **195** of the filter assembly **100** to receive the position signal *PS* and to the control unit CU to provide the filter indication *IND,* in the form of an analog or digital signal.

In view of the above, the filter assembly **100** can be easily connected to any washing machine **400** to provide it with the capacity of filtering contaminants, such as, for example, microplastics, without having to carry out complex assembly operations. In fact, it is sufficient to connect the conduit **C** to the input **IN** of the filter assembly **100,** connect the conduit **C'** to the output **OUT** of the filter assembly **100,** and communicatively couple, for example, by wiring or by wireless connection, the control unit **CU** with the position detection system of the filter assembly **100** and/or with the output system **196.**

According to a further exemplary embodiment not illustrated, the output system **196** may be directly part of the control unit **CU** itself of the washing machine **400.** In this case, the control unit **CU** is coupled to exchange signals, for example by wired and/or wireless communication interface, with the sensor **195** of the filter assembly **100** to receive the position signal *PS*.

In the exemplary embodiment illustrated in **Figure 4****,** the filter assembly **100** is connected in series to a drain system of the laundry washing machine **400** to filter the fluid that is drained from the laundry washing machine **400.** According to another exemplary embodiment not illustrated, the filter assembly **100** may instead, or in addition, be connected to a fluid recirculation system of the laundry washing machine **400** configured to recirculate the fluid collected in the sump **425** in the washing tub **420** by sucking it from there and reintroducing it into the washing tub **420.**

It is further emphasized that although in the exemplary embodiment illustrated in **Figure 4****,** the filter assembly connected to the washing machine **400** is the filter assembly **100** corresponding to the exemplary embodiment illustrated in **Figures 1A-1C****,** the filter assembly connected to the washing machine **400** may be a filter assembly corresponding to the filter assemblies **200** or **300.**

Furthermore, although in the exemplary embodiment illustrated in **Figure 4****,** the filter assembly is connected externally to the laundry washing machine **400,** similar considerations apply in the case where the filter assembly is connected internally to the laundry washing machine **400,** particularly in the case where, but not limited to this case, the filter assembly is installed to filter (at least) the fluid of a fluid recirculation system of the laundry washing machine **400.**

Of course, to meet local and specific needs, one skilled in the art may make numerous logical and/or physical modifications and alterations to the invention described above. More specifically, while the present invention has been described with a certain degree of particularity with reference to preferred embodiments thereof, it is to be understood that various omissions, substitutions, and modifications in form and detail as well as other embodiments are possible. In particular, various embodiments of the invention may also be practiced without the specific details set forth in the foregoing description to provide a more thorough understanding thereof; conversely, known features may have been omitted or simplified so as not to burden the description with unnecessary detail. Furthermore, it is expressly intended that specific elements and/or method steps described in connection with any disclosed embodiment of the invention may be incorporated into any other embodiment.

## Claims

1. Filter assembly (**100; 200; 300**) for filtering a fluid used in a laundry or textile articles washing appliance (**400**), the filter assembly comprising:
a filtering element (**105**) enclosing an inlet chamber (**110**) adapted to receive said fluid;
a housing (**115**) adapted to house the filtering element (**105**);
an outlet chamber (**120**) defined by a volume comprised between the filtering element (**105**) and the housing (**115**) for receiving filtered fluid resulting from passage of the fluid from the inlet chamber through a filtering surface (**105**(**M**)) of the filtering element;
an inlet (**IN**) through which the fluid is supplied to the inlet chamber (**110**);
an outlet (**OUT**) fluidly connected to said outlet chamber (**120**), through which the filtered fluid exits the outlet chamber (**120**);
a cleaning system located inside the inlet chamber (**110**) operable to remove filtered contaminants from the filtering surface (**105**(**M**)), the cleaning system comprising a scraper device (**140; 240**) operable to be rotated about a rotation axis (**R**) for removing filtered contaminants from said filtering surface through mechanical interaction of the scraper device with the filtering surface during rotation of the scraper device, and for moving the removed filtered contaminants away from the inlet chamber;
a collection region (**130**(**R**)) for collecting removed filtered contaminants moved away from the inlet chamber (**110**),
wherein:
the scraper device (**140; 240**) is configured to be movable with respect to the filtering element (**105**) along the rotation axis (**R**) by means of a pushing action of the collected filtered contaminants when an amount of filtered contaminants is collected in the collection region (**130**(**R**));
the filter assembly (**100; 200; 300**) further comprises a position sensing system (**190**, **195**) configured to sense the position of the scraper device (**140; 240**) along the rotation axis (**R**) and provide a signal indicative of the sensed position.

2. Filter assembly (**100; 200; 300**) according to claim 1, wherein the scraper device (**140; 240**) comprises an endless screw comprising a blade (**140**(**B**); **240**(**B**)) surrounding a central shaft (**140**(**S**); **240**(**S**)), said blade being configured to mechanically interact with the filter surface (**105**(**M**)).

3. Filter assembly (**100; 200; 300**) according to any of the preceding claims, wherein said rotation axis (**R**) is substantially parallel to said filter surface.

4. Filter assembly (**100; 200; 300**) according to any of the preceding claims, further comprising guide elements (**150, 160; 250, 260**) coupled to the inlet chamber (**110**) and extending along the rotation axis (**R**), the guide elements being configured to slidingly engage with the scraper device (**140; 240**) to allow movement of the scraper device with respect to the inlet chamber along the rotation axis.

5. Filter assembly (**100; 200; 300**) according to any of the preceding claims wherein the pushing action of the collected filtered contaminant acting on the scraper device (**140; 240**) is contrasted by a biasing element (**SE**) associated to the scraper device.

6. Filter assembly (**100; 200; 300**) according to any of the preceding claims, wherein the scraper device (**140; 240**) is configured to compact the removed filtered contaminants in the collection region (**130**(**R**)) by pressing the removed filtered contaminants in the collection region along the rotation axis (**R**) in a first direction during rotation of the scraper device.

7. Filter assembly (**100; 200; 300**) according to claim 6, wherein:
- the scraper device (**140; 240**) is movable by said pushing action of the collected filtered contaminants along the rotation axis in a second direction opposite to the first direction.

8. Filter assembly (**100; 200; 300**) according to any of the preceding claims, wherein the position sensing system (**190, 195**) comprises a magnetic position sensor.

9. Filter assembly (**100; 200**) according to any of the preceding claims, further comprising:
a flooding chamber (**198**) fluidly connected to the outlet chamber (**120**) and fluidly connectable to the inlet chamber (**110**) in a selective manner by means of a fluid communication device (**EDB**) operable for enabling a fluid communication between the inlet chamber (**110**) and the flooding chamber (**198**) in presence of a clogging of the inlet chamber and/or the filtering element, thereby allowing unfiltered fluid to flow towards said outlet (**OUT**).

10. Filter assembly (**200**) according to any of the preceding claims, wherein:
- the inlet chamber (**110**) comprises a first inlet chamber portion (**210**) fluidly connected to said inlet (**IN**), and a second inlet chamber portion (**220**) selectively fluidly separated from the first inlet chamber portion,
- the scraper device (240) is located in the first inlet chamber portion (210);
- the filter assembly (**200**) further comprises a fluid connection device comprising a displaceable body (**ADB**) for selectively enabling and disabling a fluid connection between the first (**210**) and second (**220**) inlet chamber portions based on a working condition of the first inlet chamber portion, an enablement of said fluid connection between the first and second inlet chamber portions occurring when the working condition is indicative of a clogging of the first inlet chamber portion (210), thereby allowing the fluid from the inlet (**IN**) to flow to the second inlet chamber portion (**220**) through the first inlet chamber portion (**210**), and a disablement of said fluid connection between the first and second inlet chamber portions occurring when the working condition is indicative of a non-clogging of the first inlet chamber portion (**210**) to fluidly separate the first (**210**) and second (**220**) inlet chamber portions from each other.

11. Filter assembly (**200**) according to claim 10 wherein the second inlet chamber portion (**220**) receives fluid to be filtered from the inlet (**IN**) only when the fluid connection between the first (**210**) and second (**220**) inlet chamber portions is enabled.

12. Filter assembly (**100; 200; 300**) according to any of the preceding claims, wherein said filter surface (**105**(**M**)) comprises a mesh having a size configured to retain particles having a minimum dimension comprised between 0.1µm and 5mm, preferably a minimum dimension comprised between 10µm and 100µm, more preferably a minimum dimension comprised between 10µm and 75µm.

13. A laundry or textile articles washing appliance (**400**) comprising:
- a control unit (**CU**) configured to control a laundry or textile articles treating operation of the appliance and a drain pipe (**C, C**') to drain fluid from a laundry or textile articles treating chamber (**420**) into a recirculation conduit to supply said fluid back to the laundry or textile articles treating chamber and/or a drain outside the appliance;
- a filter assembly (**100; 200; 300**) according to any of the preceding claims, wherein the inlet (**IN**) of the filter assembly is fluidly connected to the drain pipe (**C**) and the outlet of the filter assembly is connected to the recirculation conduit and/or the drain (**C'**).

14. Method for operating a filter assembly (**100; 200; 300**) according to any of the preceding claims comprising:
- operating the scraper device (**140; 240**) of the cleaning system to be rotated about a rotation axis (**R**);
- removing filtered contaminants from the filtering surface (**105**(**M**)) through mechanical interaction of the scraper device (**140; 240**) with the filtering surface during rotation of the scraper device;
- moving the removed filtered contaminants away from the inlet chamber (**110**) by means of the rotation of the scraper device (**140; 240**);
- collecting the removed filtered contaminants moved away from the inlet chamber in the collection region (**130**(**R**));
- providing a signal indicative of the position of the scraper device which moves with respect to the filtering element (**105**) along the rotational axis by means of a pushing action of the collected filtered contaminants when an amount of filtered contaminants is collected in the collection region (**130**(**R**)).

15. Method according to claim 14 further comprising:
- fluidly connecting the inlet (**IN**) of the filter assembly (**100; 200; 300**) according to any of the claims 1 to 12 to a drain pipe (**C**) of a laundry or textile articles washing appliance (**400**) according to claim 13, wherein the drain pipe is provided to drain fluid from the laundry or textile articles treating chamber;
- fluidly connecting the outlet (**OUT**) of the filter assembly to a recirculation conduit to supply fluid back to the laundry or textile articles treating chamber and/or connecting the outlet of the filter assembly to a drain (**C'**) outside the appliance;
- communicatively coupling the control unit (**CU**) of the appliance with the position sensing system (**190, 195**) of the filter assembly.
